(19) Europäisches Patentamt
European Patent Office
Office européen des brevets

(11) **EP 2 343 507 B1**

(12) **FASCICULE DE BREVET EUROPEEN**

(45) Date de publication et mention de la délivrance du brevet:
**28.11.2012 Bulletin 2012/48**

(51) Int Cl.:
***G01D 5/24*** *(2006.01)*    ***G01P 15/125*** *(2006.01)*

(21) Numéro de dépôt: **09180772.7**

(22) Date de dépôt: **24.12.2009**

(54) **Procédé de mesure d'un paramètre physique et circuit électronique d'interface d'un capteur capacitif pour sa mise en oeuvre**

Verfahren zum kapazitiven Messen eines physikalischen Parameters und elektronischer Schnittstellenschaltkreis für einen kapazitiven Sensor

Method of capacitively measuring a physical parameter and electronic circuit to interface with a capacitive sensor

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(43) Date de publication de la demande:
**13.07.2011 Bulletin 2011/28**

(73) Titulaire: **EM Microelectronic-Marin SA**
**2074 Marin (CH)**

(72) Inventeurs:
• **Grosjean, Sylvain**
**25500, Les Fins (FR)**
• **Willemin, Michel**
**2515, Prêles (CH)**
• **Deschildre, Alexandre**
**2074, Marin (CH)**
• **Pfefferli, Beat**
**2075, Thielle-Wavre (CH)**

(74) Mandataire: **Ravenel, Thierry Gérard Louis et al**
**ICB**
**Ingénieurs Conseils en Brevets SA**
**Faubourg de l'Hôpital 3**
**2001 Neuchâtel (CH)**

(56) Documents cités:
**EP-A1- 1 835 263    WO-A1-2008/107737**

**Description**

L'invention concerne un procédé de mesure d'un paramètre physique, tel qu'une accélération, une vitesse angulaire, une force ou une pression, au moyen d'un circuit électronique d'interface d'un capteur capacitif.

L'invention concerne également un circuit électronique d'interface d'un capteur capacitif pour la mise en oeuvre du procédé de mesure. Le capteur capacitif est composé d'au moins deux condensateurs montés en différentiel. Une électrode commune des condensateurs est susceptible de se déplacer entre deux électrodes fixes sous l'action par exemple d'une force pour modifier la valeur capacitive de chaque condensateur.

Dans une conception traditionnelle simple d'un tel capteur capacitif, l'électrode commune, qui est mobile, fait partie d'une armature maintenue élastiquement entre les deux électrodes fixes. Dans ce cas, le capteur capacitif peut être capable d'opérer une mesure notamment selon une direction de mouvement de l'électrode mobile. L'électrode mobile peut se déplacer d'une certaine distance en direction de l'une ou l'autre des électrodes fixes sous l'action notamment d'une force.

Avec un tel capteur à un seul axe de mesure, l'électrode commune se trouve au repos approximativement à égale distance de l'une et de l'autre électrode fixe, ce qui définit des valeurs capacitives égales des deux condensateurs. Par contre lorsque l'électrode commune se déplace sous l'action par exemple d'une force, la valeur capacitive de chaque condensateur varie inversement. Le circuit électronique d'interface relié au capteur capacitif permet ainsi de fournir un signal de sortie analogique. Ce signal de sortie analogique est défini sous la forme d'une tension dépendant de la variation des capacités des deux condensateurs.

Ce type de circuit électronique d'interface d'un capteur capacitif est décrit par exemple dans l'article rédigé par MM. H. Leuthold et F. Rudolph, qui est paru dans la revue intitulée "Sensors and actuators" A21-A23 (1990), pages 278 à 281.

Le capteur capacitif peut être un accéléromètre pour effectuer une mesure d'accélération en liaison avec un circuit électronique d'interface. Il peut s'agir d'un +accéléromètre uniaxe comme le capteur capacitif susmentionné ou d'un accéléromètre multiaxe ou triaxial pour effectuer une mesure dans les trois directions X, Y et Z. Un tel accéléromètre triaxial du type MEMS peut comprendre une masse unique, c'est-à-dire une masse inertielle commune aux trois paires de condensateurs différentiels, ou trois masses pour les trois paires de condensateurs. Dans le premier cas, une seule électrode commune et six électrodes fixes sont prévues, alors que pour le second cas, une électrode commune avec deux électrodes fixes sont prévues pour chaque paire de condensateurs.

Pour un circuit électronique traditionnel d'interface d'un capteur capacitif, tel qu'un accéléromètre MEMS uniaxe ou triaxial, la tension de sortie varie idéalement de manière linéaire par rapport au déplacement de l'électrode commune mobile. Cependant comme le circuit électronique est en principe intégré dans un substrat semi-conducteur, il doit être tenu compte des capacités parasites en entrée, qui s'ajoutent aux capacités des condensateurs du capteur. Ces capacités parasites ne dépendent pratiquement pas du déplacement de l'électrode commune, ce qui crée des non-linéarités. Ainsi, la tension de sortie du circuit électronique ne varie pas linéairement par rapport au déplacement de l'électrode commune mobile. Ces capacités parasites ont aussi pour effet de faire baisser la sensibilité ou le gain du circuit électronique.

Le capteur du type MEMS servant d'accéléromètre est intégré également dans un substrat semi-conducteur, tel qu'un substrat en Silicium. Dans ces conditions, il survient également un problème de non-linéarité lié au potentiel du substrat lors du fonctionnement du capteur. Ce potentiel de substrat est difficile à contrôler sur toute la structure dudit capteur, car le substrat n'est jamais totalement conducteur. L'électrode mobile du capteur peut également être dans une position décalée par rapport aux électrodes fixes dans un mode de repos, ce qui peut créer une erreur de mesure sans calibrage. Du fait de ces non-linéarités, la force électrostatique mesurée n'est pas nulle dans un mode de repos du capteur et du circuit électronique. De par l'influence du potentiel du substrat sur la force électrostatique, cela conduit à une variation de la force réelle mesurée, qui est appliquée sur l'électrode commune mobile, ce qui est un inconvénient.

Pour effectuer généralement une mesure d'une force, d'une accélération ou d'une pression par l'intermédiaire du circuit électronique, les électrodes fixes de deux condensateurs ou des paires de condensateurs sont polarisées ou excitées cycliquement par des tensions de polarité opposée par rapport à une tension de référence au repos. En polarisant les deux électrodes fixes à des niveaux de tension différents, la différence de charges sur l'électrode mobile peut être mesurée et convertie en au moins une tension en sortie du circuit électronique. Lorsque la ou les tensions de sortie sont stabilisées à leur valeur finale, la charge totale sur l'électrode mobile devient nulle. Ces tensions de sortie peuvent être fournies échantillonnées à un circuit de traitement capable de fournir des données d'accélération, de force, de pression ou également de vitesse angulaire selon la structure du capteur.

Il est à noter que traditionnellement avec un circuit électronique intégré d'interface d'un capteur capacitif, la mesure d'une force, d'une accélération ou d'une pression, est dépendante des non-linéarités susmentionnées et de tout écart de tension lié aux composants électroniques non appariés. Pour surmonter ce problème, il a déjà été proposé une solution dans la demande de brevet EP 1 835 263.

Dans la demande de brevet EP 1 835 263, le circuit électronique permet d'opérer une mesure d'un paramètre physique, tel qu'une accélération au moyen d'un capteur capacitif, qui ne comprend qu'une paire de condensateurs fonctionnant en différentiel. L'électrode commune est connectée à un amplificateur à transfert de charges traditionnel dont la sortie est reliée à un premier intégrateur qui fournit une première tension de sortie analogique dans une première série de phases de mesure, et à un second intégrateur qui fournit une seconde tension de sortie analogique dans une seconde série successive de phases de mesure. Ce circuit électronique est composé donc d'une double structure symétrique avec les deux intégrateurs et encore deux blocs d'excitation des électrodes fixes à fonctionnement alternatif totalement symétrique.

Ainsi dans la première série de phases, les électrodes fixes sont d'une part polarisées par la première tension de sortie, et d'autre part polarisées par des niveaux de tension haut et bas d'une source de tension d'alimentation. Dans la seconde série de phases, les électrodes fixes sont d'une part polarisées par la seconde tension de sortie, et d'autre part polarisées inversement à la première série de phases par des niveaux de tension bas et haut de la source de tension d'alimentation. Grâce à cela, un écart de tension (offset) dû à la technologie ou à la variation de tension d'alimentation peut être minimisé voire supprimé à l'aide des deux tensions de sortie analogiques des intégrateurs. De plus, le potentiel du substrat n'a plus une grande importance étant donné que le circuit électronique est conçu avec une double structure identique à fonctionnement totalement symétrique.

Cependant un inconvénient d'un tel circuit électronique du document de brevet EP 1 835 263, est qu'il fournit des signaux de sortie, tels que des tensions de sortie, sous forme analogique. Ceci nécessite l'emploi de deux intégrateurs. Dans ces conditions, cela ne permet pas de réduire considérablement la taille des composants intégrés, ainsi que la consommation électrique du circuit électronique s'il est envisagé de l'intégrer dans un substrat silicium au moyen d'une technologie CMOS à 0.18 $\mu$m ou inférieure. De plus, le circuit électronique est prévu pour n'être relié qu'à une paire de condensateurs d'un capteur capacitif à un seul axe de mesure.

On peut citer à ce titre le document de brevet WO 2004/113930, qui décrit un circuit électronique relié à un capteur capacitif uniaxe ou multiaxe pour la mesure d'une accélération. Par rapport au circuit électronique susmentionné, il est prévu à la suite de l'amplificateur à transfert de charges, qui est relié à l'électrode commune mobile, une logique spécifique à chaque axe de mesure, qui traite des signaux numériques de mesure. Chaque logique fournit en sortie un signal binaire de mesure représentatif d'un niveau de tension de mesure fonction du déplacement de l'électrode mobile par rapport aux électrodes fixes pour chaque axe successivement. Le signal binaire de mesure est fourni successivement pour chaque axe à un convertisseur numérique-analogique. Ce convertisseur fournit dans une phase de chaque cycle de mesure pour un axe sélectionné, une tension de mesure aux électrodes fixes en alternance avec une phase de polarisation des électrodes fixes à une tension haute et une tension basse d'une source de tension d'alimentation. Le signal binaire obtenu en sortie de chaque logique est incrémenté ou décrémenté d'une unité à chaque série de phases de mesure, jusqu'à ce que la charge totale sur l'électrode mobile devienne nulle. Grâce à l'emploi de logique de traitement de signaux numériques en sortie de l'amplificateur, cela permet de réduire la taille des composants électroniques et de ce fait également la consommation électrique des étages de sortie du circuit électronique. Cependant rien n'est prévu pour supprimer les non-linéarités susmentionnées et les écarts de tension (offset) dus à la technologie ou à la variation de tension d'alimentation, ce qui est un inconvénient. De plus, le temps pour stabiliser avec précision le signal numérique de sortie pour chaque axe de mesure est relativement long, ce qui est un autre inconvénient.

On peut citer également le document de brevet WO 2008/107737, qui décrit un circuit électronique d'interface d'un capteur de mesure, et un procédé de mise en action du circuit électronique. Le capteur de mesure est constitué de deux condensateurs montés en différentiel pour la mesure d'une accélération. Un signal d'entrée analogique de la mesure est mémorisé à la suite d'un amplificateur à transfert de charges dans une phase d'un cycle de mesure suite à une polarisation des électrodes fixes des condensateurs. Le signal analogique est ensuite converti en un signal numérique mémorisé dans une logique du circuit électronique. Le signal numérique est par la suite converti par un convertisseur numérique-analogique en un signal retour analogique sous forme de tension, qui est appliqué à toutes les électrodes du capteur dans une phase successive de chaque cycle de mesure. Dans un cycle de mesure, les électrodes fixes sont polarisées une première fois par une première polarisation et une seconde fois par une seconde polarisation inverse à la première polarisation. Cela permet de supprimer les courants de fuite du circuit électronique. Par contre, un grand nombre d'étapes du procédé est nécessaire pour obtenir en sortie un signal de mesure d'un paramètre physique, ce qui constitue un inconvénient.

L'invention a donc pour but de pallier aux inconvénients de l'état de la technique susmentionnés en fournissant un procédé de mesure d'un paramètre physique au moyen d'un circuit électronique d'interface d'un capteur capacitif, qui permet de fournir rapidement des signaux de sortie précis en supprimant tout écart de tension. Une réduction de la taille des composants lors de l'intégration du circuit électronique peut ainsi être réalisée.

A cet effet, l'invention concerne un procédé de mesure d'un paramètre physique au moyen d'un circuit électronique d'interface d'un capteur capacitif, qui comprend les caractéristiques mentionnées dans la revendication 1.

Des étapes particulières du procédé de mesure sont définies dans les revendications dépendantes 2 à 7.

Un avantage du procédé de mesure réside dans le fait qu'au moins un signal numérique de sortie d'une mesure d'un paramètre physique peut être fourni rapidement en sortie du circuit électronique. Ce signal numérique de sortie peut représenter l'addition d'un premier signal numérique de mesure dépendant d'une polarisation positive des électrodes fixes et d'un second signal numérique de mesure dépendant d'une polarisation négative des électrodes fixes, c'est-à-dire d'une polarisation inversée desdites électrodes fixes. Chaque signal numérique de mesure est stocké et rafraîchi dans un registre particulier pendant tous les cycles successifs de mesure.

Un autre avantage du procédé de mesure réside dans le fait que pour converger rapidement vers une valeur finale de chaque signal numérique de mesure, il est utilisé notamment pendant un certain nombre de cycles un algorithme de dichotomie. Les bits de poids fort du mot binaire de chaque signal numérique de mesure sont utilisés depuis le bit de poids le plus fort au bit de poids le plus faible durant les cycles successifs utilisant l'algorithme de dichotomie. Il peut être prévu 8 cycles successifs de mesure utilisant l'algorithme de dichotomie avec un mot binaire comprenant par exemple 10 bits, dont 8 bits de poids fort. Par la suite, des cycles de suréchantillonnage sont utilisés en ajustant les bits de poids faible du mot binaire. Il peut être prévu 8 cycles de suréchantillonnage suivant les 8 cycles utilisant l'algorithme de dichotomie.

A cet effet, l'invention concerne également un circuit électronique d'interface d'un capteur capacitif cité ci-devant pour la mise en oeuvre du procédé de mesure, qui comprend les caractéristiques mentionnées dans la revendication 8.

Des formes d'exécution spécifiques du circuit électronique sont définies dans les revendications dépendantes 9 à 12.

Un avantage du circuit électronique d'interface d'un capteur physique réside dans le fait qu'il permet d'obtenir rapidement des signaux numériques de mesure stabilisés en sortie grâce à un traitement numérique directement après l'amplificateur à transfert de charges. Ces signaux numériques de mesure sont traités dans l'unité logique. Ces signaux numériques sont adaptés depuis les premiers cycles de mesure en utilisant un algorithme de dichotomie. Deux signaux numériques dépendant d'une polarisation positive et d'une polarisation négative des électrodes fixes de la paire de condensateurs, sont fournis dans l'unité logique. Ceci permet par combinaison des signaux numériques de supprimer tout écart de tension notamment des composants du circuit électronique.

Un autre avantage du circuit électronique d'interface d'un capteur physique réside dans le fait qu'il peut fournir deux signaux numériques pour chaque axe d'un capteur triaxial. Un seul amplificateur, une unité logique et un seul convertisseur numérique-analogique sont ainsi prévus pour la mesure du paramètre physique selon les trois axes. Ceci limite la redondance du circuit électronique.

Les buts, avantages et caractéristiques du procédé de mesure d'un paramètre physique et le circuit électronique d'interface d'un capteur capacitif pour sa mise en oeuvre apparaîtront mieux dans la description suivante en regard des dessins sur lesquels :

- la figure 1 représente de manière simplifiée un circuit électronique d'interface d'un capteur capacitif pour la mise en oeuvre du procédé de mesure d'un paramètre physique selon l'invention, et

- la figure 2 représente un diagramme temporel de différents signaux de tension dans des cycles finaux de mesure successifs du fonctionnement du circuit électronique d'interface d'un capteur capacitif selon l'invention.

Dans la description suivante comme différents composants du circuit électronique d'interface d'un capteur à condensateurs différentiels sont bien connus dans ce domaine technique, ils ne seront pas tous explicités en détail. L'accent porte principalement sur le procédé de mesure du paramètre physique au moyen d'un circuit électronique qui fournit des signaux numériques de mesure en sortie.

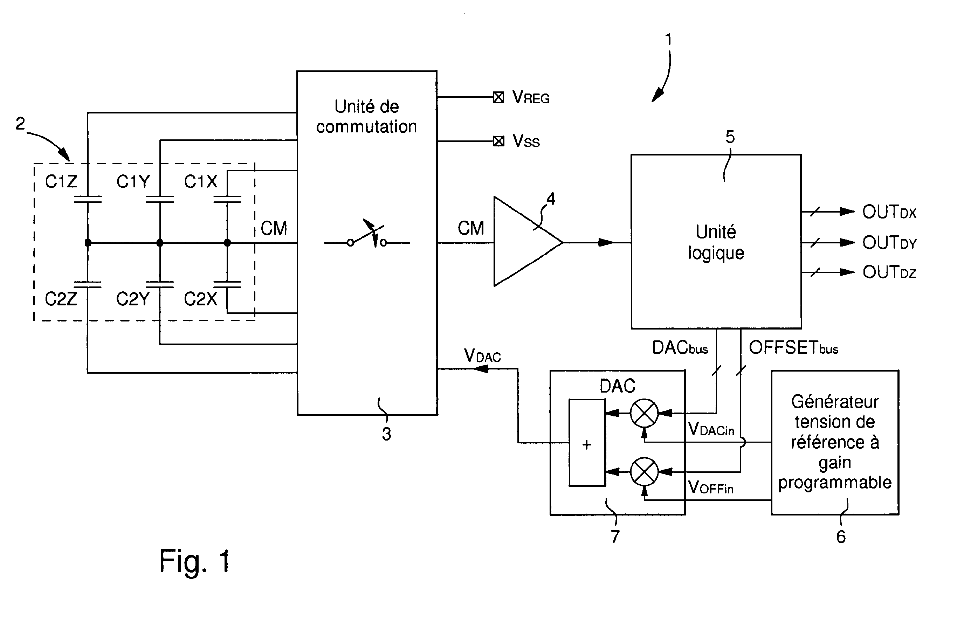

La figure 1 montre un schéma simplifié des différents composants du circuit électronique 1 d'interface d'un capteur capacitif 2 selon l'invention. Dans cette forme d'exécution, il est prévu de relier un capteur capacitif 2 triaxial du type MEMS à masse unique au circuit électronique 1, même s'il est tout à fait concevable également de connecter un capteur triaxial à trois masses mobiles ou un capteur uniaxe. Ce capteur capacitif est donc composé de trois paires de condensateurs C1X, C2X, C1 Y, C2Y, C1Z et C2Z. Les deux condensateurs de chaque paire sont montés en différentiel. Une électrode commune CM des paires de condensateurs est susceptible de se déplacer sous l'action notamment d'une force entre deux électrodes fixes de chaque paire de condensateurs pour effectuer une mesure tenant compte des trois axes X, Y et Z. Le circuit électronique 1 peut fournir des signaux numériques de mesure pour chaque axe, qui sont relatifs à un paramètre physique, tel qu'une accélération, une vitesse angulaire, une pression ou une force, en fonction du déplacement de l'électrode commune mobile. Dans le cas d'une mesure d'accélération, le circuit électronique peut être configuré pour fournir des signaux numériques de mesure entre des valeurs minimum et maximum d'accélération. Il peut être choisi par exemple de configurer le circuit électronique pour fournir des signaux numériques de mesure dans la gamme de -2g à +2g d'accélération. Une variation de tension de l'ordre de 3 à 20 mV peut être compté pour 1 g d'accélération.

L'électrode mobile CM peut faire partie d'une armature du capteur maintenue élastiquement dans une position centrale au repos entre les deux électrodes fixes de chaque paire de condensateurs C1X, C2X, C1 Y, C2Y, C1Z et C2Z. Le circuit électronique 1 peut être alimenté par une source de tension continue non représentée, qui fournit à une première borne une tension régulée haute $V_{REG}$ et à une seconde borne une tension basse $V_{ss}$. La tension basse peut être définie à 0 V, alors que la tension régulée haute peut être fixée à 1.65 V par exemple. L'électrode fixe de chaque condensateur peut être polarisée dans une phase d'un cycle de mesure, soit à la tension haute $V_{REG}$, soit à la tension basse $V_{ss}$ dans un mode de fonctionnement du circuit électronique. De ce fait, comme les deux condensateurs C1X, C2X, C1Y, C2Y, C1Z et C2Z de chaque paire ont une valeur capacitive égale dans un mode de repos du capteur 2, la tension sur l'électrode commune CM est de préférence égale au repos à une tension intermédiaire $V_{REG}/2$ entre la tension régulée $V_{REG}$ et la tension basse $V_{ss}$ à 0 V.

Les signaux numériques de mesure fournis par le circuit électronique 1 sont proportionnels pour deux condensateurs C1 et C2 à (C1-C2)/(C1+C2). Une fois les signaux numériques de mesure stabilisés à une mesure finale du paramètre physique, tout écoulement de charges sur les deux condensateurs de chaque paire s'annule. Ainsi le but du circuit électronique consiste à trouver une tension à appliquer sur chaque électrode fixe dans une phase d'égalisation des charges, qui satisfait à $(V_{REG}-V_{DAC}).C1 = (V_{DAC}-V_{SS}).C2$. Ceci est atteint quand $V_{DAC} = (V_{REG}/2).(1+(C1-C2)/(C1+C2))$.

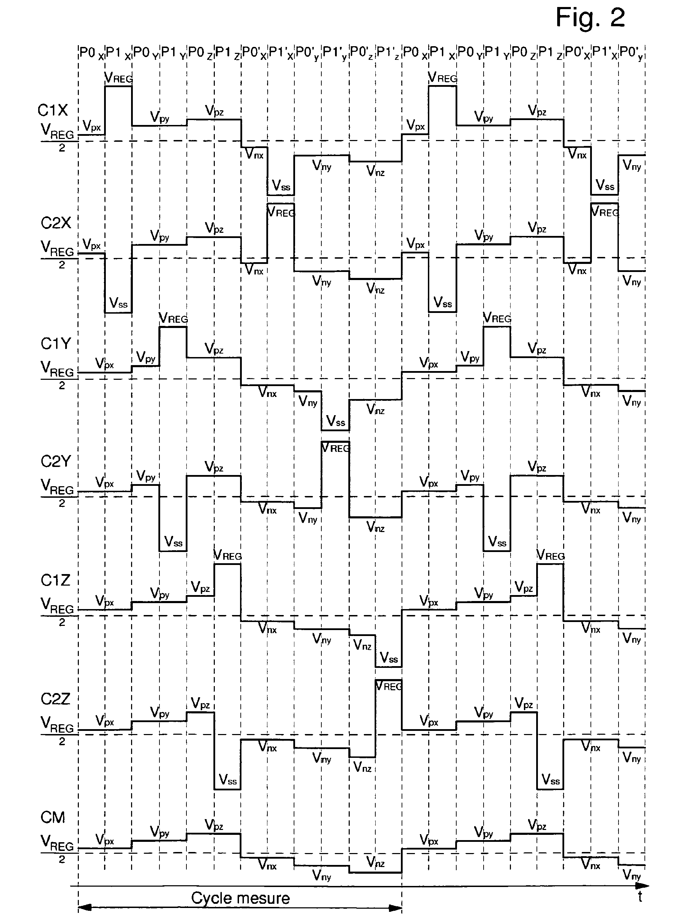

Le circuit électronique 1 comprend un amplificateur à transfert de charges du type comparateur 4, qui est relié directement à l'électrode mobile CM des condensateurs par l'intermédiaire d'une unité de commutation 3. L'unité de commutation 3 reçoit les tensions $V_{REG}$, $V_{ss}$ et $V_{DAC}$ à appliquer aux électrodes du capteur selon les phases d'un cycle de mesure. La tension régulée $V_{REG}$ et la tension basse $V_{ss}$ sont appliquées aux électrodes fixes, alors que la tension $V_{DAC}$, d'un convertisseur numérique-analogique 7 en contre-réaction, est appliquée à toutes les électrodes. Les tensions appliquées aux électrodes durant un cycle de mesure sont expliquées ci-après en référence à la figure 2.

L'amplificateur comparateur 4 est de conception très simple du type de celui décrit dans l'article intitulé "A 1 mV MOS Comparator" de la revue IEEE J. Solid-State Circuits, vol. SC-13. pp. 294-298 de juin 1978. Cet amplificateur comparateur 4 comprend généralement un condensateur en entrée relié à l'électrode commune CM, suivi d'étages amplificateurs pour fournir en sortie un signal de forme numérique en tout ou rien. Cet amplificateur à transfert de charges a un très haut gain. Le signal de sortie de l'amplificateur est à l'état "1 " proche de la tension régulée $V_{REG}$ quand la tension sur l'électrode mobile CM augmente par l'accumulation de charges positives dans les cycles de mesure. Par contre, le signal de sortie de l'amplificateur passe à l'état "0" proche de la tension basse $V_{ss}$ quand la tension sur l'électrode mobile CM diminue par l'accumulation de charges négatives dans les cycles de mesure.

Le circuit électronique 1 comprend encore une unité logique 5, qui comprend notamment des moyens de mémorisation, un processeur cadencé par un signal d'horloge traditionnel, au moins un compteur relié au processeur, et plusieurs registres pour stocker des mots binaires de mesure pour chaque axe de mesure. Il est prévu deux registres non représentés par axe de mesure, ce qui porte à six registres pour les trois axes de mesure. Pour chaque axe, un premier registre reçoit un premier signal numérique de mesure provenant d'une polarisation définie positive (pol à "0") des électrodes fixes de la paire de condensateurs correspondante, alors qu'un second registre reçoit un second signal numérique de mesure provenant d'une polarisation définie négative (pol à "1 ") des électrodes fixes de la paire de condensateurs correspondante. Comme expliqué ci-après, la polarisation négative est simplement une polarisation inversée de la polarisation positive. Ceci permet à l'unité logique 5 par combinaison ou addition des deux registres par axe de mesure de fournir un signal numérique de sortie par $OUT_{DX}$, $OUT_{Dy}$, $OUT_{DZ}$, dans lequel tout écart de tension (offset) a été supprimé.

Le signal numérique de mesure de chaque registre peut être un mot binaire par exemple sur 10 bits. Le compteur en liaison du processeur permet de placer un état "1" ou un état "0" dans une position du mot binaire sur la base du signal fourni par l'amplificateur comparateur 4. Selon le procédé de mesure expliqué ci-après, il est utilisé un algorithme de dichotomie pour les premiers cycles de mesure avant l'obtention d'une valeur finale. Ce sont donc les bits de poids fort qui sont modifiés dans chaque registre pour mettre en fonction l'algorithme de dichotomie mémorisé dans les moyens de mémorisation comme expliqué ci-après. Dans la phase de dichotomie, le compteur de bits doit changer selon bit = comp XNOR pol, où comp est la valeur de sortie de l'amplificateur comparateur 4, et pol définit la polarisation positive ou la polarisation négative. A chaque cycle de mesure successif et pour chaque axe, le mot binaire de chaque registre est adapté.

Chaque mot binaire DACbus des registres est fourni successivement dans chaque cycle de mesure à un convertisseur numérique-analogique DAC 7 de manière à convertir notamment le mot binaire DACbus en une tension de sortie $V_{DAC}$. Cette tension de sortie du DAC permet de décharger dans une des phases du cycle de mesure tous les condensateurs C1X, C2X, C1Y, C2Y, C1Z, C2Z et CM à une valeur de tension dépendant du mot binaire DACbus d'un axe particulier. Le mot binaire DACbus est multiplié dans un premier multiplicateur dans le convertisseur numérique-analogique 7 par une tension de référence $V_{DACin}$, qui provient d'un générateur de tension de référence à gain programmable 6. Cette tension de référence peut être fournie au moyen d'un diviseur résistif connecté entre la tension régulée $V_{REG}$ et la masse $V_{ss}$.

L'unité logique 5 fournit également un mot binaire d'ajustage OFFSETbus (10 bits) d'un écart de tension relatif au capteur MEMS en entrée. Ce mot binaire d'ajustage OFFSETbus est multiplié dans un second multiplicateur dans le convertisseur numérique-analogique 7 avec une tension d'ajustage $V_{OFFin}$, qui provient du générateur de tension de référence à gain programmable 6. Cette tension d'ajustage $V_{OFFin}$ peut également être obtenue au moyen d'un diviseur résistif connecté entre la tension régulée $V_{REG}$ et la masse $V_{ss}$. Une addition des tensions de sortie des deux multiplicateurs du convertisseur 7 est ensuite effectuée de manière que le convertisseur numérique-analogique fournisse en sortie la tension $V_{DAC}$. Comme on le verra ci-après, l'écart de tension lié au capteur MEMS ne dépend pas de la polarisation appliquée aux électrodes fixes des paires de condensateurs. Une étape préliminaire de calibrage pour corriger cet écart de tension (offset) du capteur MEMS peut être effectuée une fois pour toute avant la mesure du paramètre physique du circuit électronique 1.

Comme les mots binaires DACbus et OFFSETbus sont sur 10 bits de 0 à 1023, on peut exprimer la tension de sortie $V_{DAC}$ provenant d'une polarisation positive (polarité "0") des électrodes fixes d'une part et d'une polarisation négative (polarité "1") des électrodes fixes d'autre part. Ces deux équations eq(0) et eq(1) des deux tensions $V_{DAC}$ sont exprimées comme suit :

$$eq(0): \quad V_{DAC}(0) = V_{REG}/2 + V_{DACoffset} + (DACbus(0)-512) \cdot K_{DAC} \cdot V_{REG} +$$
$$(OFFSETbus-512) \cdot K_{OFF} \cdot V_{REG}$$

$$eq(1): \quad V_{DAC}(1) = V_{REG}/2 + V_{DACoffset} - (DACbus(1)-512) \cdot K_{DAC} \cdot V_{REG} -$$
$$(OFFSETbus-512) \cdot K_{OFF} \cdot V_{REG}$$

$K_{DAC}$ est un facteur qui définit le gain du système. Ce gain peut être programmable par exemple en générant une tension $V_{DACin}$ qui provient d'un diviseur résistif du générateur de tension de référence 6. $K_{OFF}$ est un facteur, qui définit le gain de la circuiterie d'ajustage de l'écart de tension (offset) du capteur MEMS. Ce gain peut être adapté selon la plage d'ajustage désirée par exemple en générant une tension $V_{OFFin}$ qui provient d'un autre diviseur résistif du générateur de tension de référence 6. DACbus(0) définit le mot binaire sur 10 bits, qui provient d'un premier registre de l'unité logique 5, qui est appliqué au convertisseur DAC 7 durant les phases de la polarisation positive. Ce mot binaire est défini de 0 à 1023. DACbus(1) définit le mot binaire sur 10 bits, qui provient d'un second registre de l'unité logique 5, qui est appliqué au convertisseur DAC 7 durant les phases de la polarisation négative. Ce mot binaire est défini de 0 à 1023. OFFSETbus définit le mot binaire d'ajustage sur 10 bits, qui est appliqué au convertisseur DAC 7 pour réaliser la correction de l'écart de tension (offset) lié au capteur MEMS. $V_{DACoffset}$ représente l'écart parasite de tension (offset) du convertisseur DAC 7, ce qu'on veut notamment supprimer. Cet écart parasite de tension englobe tout l'écart de tension lié au circuit électronique (amplificateur, convertisseur,...), et peut aussi représenter le bruit basse fréquence ("flicker noise" en terminologie anglaise).

Il est encore à noter que DACbus(0) peut être différent de DACbus(1) si une accélération est mesurée, car ces mots binaires dépendent de l'état de la polarisation appliquée aux électrodes fixes. Par contre OFFSETbus ne dépend absolument pas de la polarisation appliquée aux électrodes fixes. Ainsi OFFSETbus est choisi de manière définitive après l'étape préliminaire de calibrage du capteur MEMS lié au circuit électronique comme indiqué ci-devant. Ce mot binaire d'ajustage peut être mémorisé dans les moyens de mémorisation de l'unité logique 5. Dans le cas où le capteur MEMS a besoin d'une variation de tension $V_{MEMS}$ autour de $V_{REG}/2$ pour réaliser l'équilibre des charges, les équations eq(0) et eq(1) prennent la forme suivante :

$$eq(0): \quad V_{REG}/2 + V_{MEMS} = V_{REG}/2 + V_{DACoffset} + (DACbus(0)-512) \cdot K_{DAC} \cdot V_{REG} +$$
$$(OFFSETbus-512) \cdot K_{OFF} \cdot V_{REG}$$

$$eq(1): \quad V_{REG}/2 - V_{MEMS} = V_{REG}/2 + V_{DACoffset} - (DACbus(1)-512) \cdot K_{DAC} \cdot V_{REG} -$$
$$(OFFSETbus-512) \cdot K_{OFF} \cdot V_{REG}$$

Si la capacité C1X est plus grande que la capacité C2X par exemple, l'équilibre des charges se fait à une tension supérieure à $V_{REG}/2$ pour la polarisation positive et à une tension inférieure à $V_{REG}/2$ pour une polarisation négative. Si on effectue la soustraction de ces deux équations eq(0) et eq(1), cela donne l'équation eq(2) suivante :

$$eq(2) : \quad 2 \cdot V_{MEMS} = (DACbus(0)+DACbus(1)-1024) \cdot K_{DAC} \cdot V_{REG} + 2 \cdot (OFFSETbus-512) \cdot K_{OFF} \cdot V_{REG}$$

DACbus(0)+DACbus(1)-1024 est proportionnel à $V_{MEMS}$, qui est également proportionnelle à l'accélération. Le terme $V_{DAcoffset}$ a disparu de l'équation eq(2) ce qui est le but final. Le gain du système dépend donc du choix de $K_{DAC}$. L'écart de tension du capteur MEMS peut aussi toujours être supprimé au moyen d'une bonne sélection du mot binaire OFFSETbus.

Pour mieux comprendre le fonctionnement du circuit électronique d'interface du capteur capacitif triaxial, on peut se reporter tout d'abord à la figure 2, qui représente un diagramme temporel de différents signaux de tension sur les électrodes des condensateurs. Le diagramme temporel de cette figure 2 est par simplification relatif à un stade de stabilisation des signaux numériques de sortie pour chaque axe de mesure fonction d'une accélération appliquée à la masse mobile du capteur MEMS. Dans ce cas de figure, l'électrode mobile est plus proche des électrodes fixes C1X, C1Y, C1Z, que des électrodes fixes complémentaires C2X, C2Y, C2Z. Ainsi la capacité C1X est plus grande que la capacité C2X, la capacité C1Y est plus grande que la capacité C2Y, et la capacité C1Z est plus grande que la capacité C2Z. De plus, l'accélération est plus grande dans la direction de l'axe Z que celle de l'axe Y, qui est également plus grande que l'accélération de l'axe X.

Sur la figure 2, la tension $V_{DAC}$ appliquée sur les électrodes fixes C1X, C2X, C1 Y, C2Y, C1Z, C2Z et l'électrode commune CM est fonction de chaque mot binaire successif des registres. Les registres de l'unité logique mémorisent les signaux numériques de mesure à polarisation positive et à polarisation négative de chaque axe. De ce fait, la tension $V_{DAC}$ correspond à Vpx ou Vnx pour une polarisation positive ou négative des électrodes fixes des condensateurs C1X et C2X, à Vpy ou Vny pour une polarisation positive ou négative des électrodes fixes des condensateurs C1Y et C2Y, et à Vpz ou Vnz pour une polarisation positive ou négative des électrodes fixes des condensateurs C1Z et C2Z.

Un cycle de mesure est divisé normalement en 12 phases successives avec une fois une polarisation positive des électrodes fixes des trois paires de condensateurs, et une fois une polarisation négative des électrodes fixes des trois paires de condensateurs. La durée d'une phase peut être de l'ordre de 2 $\mu$s. Dans une première phase $P0_x$, toutes les électrodes des condensateurs sont polarisées avec la tension $V_{DAC}$ valant Vpx. Cette tension Vpx est obtenue à travers le convertisseur numérique-analogique 7 de la figure 1 sur la base du premier registre de l'unité logique 5. Ce premier registre est relatif à l'axe X pour une polarisation positive des électrodes fixes des condensateurs C1X et C2X d'un cycle précédent. Dans une seconde phase P1x, l'électrode fixe du premier condensateur C1X est polarisée à la tension régulée $V_{REG}$, alors que l'électrode fixe du second condensateur C2X est polarisée à la tension basse $V_{ss}$. Les autres électrodes sont maintenues à la tension Vpx.

Dans une troisième phase $P0_Y$, toutes les électrodes des condensateurs sont polarisées avec la tension $V_{DAC}$ valant Vpy. Cette tension Vpy est obtenue à travers le convertisseur numérique-analogique 7 de la figure 1 sur la base du premier registre de l'unité logique 5. Ce premier registre est relatif à l'axe Y pour une polarisation positive des électrodes fixes des condensateurs C1Y et C2Y d'un cycle précédent. Dans une quatrième phase $P1_Y$, l'électrode fixe du premier condensateur C1Y est polarisée à la tension régulée $V_{REG}$, alors que l'électrode fixe du second condensateur C2Y est polarisée à la tension basse $V_{ss}$. Les autres électrodes sont maintenues à la tension Vpy.

Dans une cinquième phase $P0_z$, toutes les électrodes des condensateurs sont polarisées avec la tension $V_{DAC}$ valant Vpz. Cette tension Vpz est obtenue par le convertisseur numérique-analogique 7 de la figure 1 sur la base du premier registre de l'unité logique 5. Ce premier registre est relatif à l'axe Z pour une polarisation positive des électrodes fixes des condensateurs C1Z et C2Z d'un cycle précédent. Dans une sixième phase $P1_z$, l'électrode fixe du premier condensateur C1Z est polarisée à la tension régulée $V_{REG}$, alors que l'électrode fixe du second condensateur C2Z est polarisée à la tension basse $V_{ss}$. Les autres électrodes sont maintenues à la tension Vpz.

Dans une septième phase $P0_x$, toutes les électrodes des condensateurs sont polarisées avec la tension $V_{DAC}$ valant Vnx. Cette tension Vnx est obtenue à travers le convertisseur numérique-analogique 7 de la figure 1 sur la base du second registre de l'unité logique 5. Ce second registre est relatif à l'axe X pour une polarisation négative des électrodes fixes des condensateurs C1X et C2X d'un cycle précédent. Dans une huitième phase P1'x, l'électrode fixe du premier condensateur C1X est polarisée à la tension basse $V_{ss}$, alors que l'électrode fixe du second condensateur C2X est polarisée à la tension régulée $V_{REG}$. Les autres électrodes sont maintenues à la tension Vnx.

Dans une neuvième phase P0y, toutes les électrodes des condensateurs sont polarisées avec la tension $V_{DAC}$ valant Vny. Cette tension Vny est obtenue par le convertisseur numérique-analogique 7 de la figure 1 sur la base du second registre de l'unité logique 5. Ce second registre est relatif à l'axe Y pour une polarisation négative des électrodes fixes des condensateurs C1Y et C2Y d'un cycle précédent. Dans une dixième phase $P1'_Y$, l'électrode fixe du premier condensateur C1Y est polarisée à la tension basse $V_{ss}$, alors que l'électrode fixe du second condensateur C2Y est polarisée à la tension régulée $V_{REG}$. Les autres électrodes sont maintenues à la tension Vny.

Dans une onzième phase $P0_z$, toutes les électrodes des condensateurs sont polarisées avec la tension $V_{DAC}$

valant Vnz. Cette tension Vnz est obtenue par le convertisseur numérique-analogique 7 de la figure 1 sur la base du second registre de l'unité logique 5. Ce second registre est relatif à l'axe Z pour une polarisation négative des électrodes fixes des condensateurs C1Z et C2Z d'un cycle précédent. Finalement dans une douzième phase P1'z, l'électrode fixe du premier condensateur C1Z est polarisée à la tension basse $V_{ss}$, alors que l'électrode fixe du second condensateur C2Z est polarisée à la tension régulée $V_{REG}$. Les autres électrodes sont maintenues à la tension Vnz.

Plusieurs cycles de 12 phases se répètent successivement pour effectuer une mesure du paramètre physique, tel qu'une accélération au moyen du capteur triaxial. Une conversion pour un axe de mesure correspond à 16 transferts de charges. La durée de la conversion pour les trois axes de mesure peut être inférieure à 500 μs si chaque phase est de durée de l'ordre de 2 μs ou inférieure. Dans les 8 premiers cycles de mesure, il est utilisé l'algorithme de dichotomie, alors que pour les 8 cycles suivants de mesure, il est utilisé un suréchantillonnage. Depuis le début d'une mesure d'un paramètre physique, généralement dans le premier cycle toutes les tensions $V_{DAC}$, des phases 0, 2, 4, 6, 8 et 10, valent $V_{REG}$/2. Dans les phases 1, 3 et 5, les électrodes fixes de C1X, C1Y et C1Z sont successivement polarisées à $V_{REG}$, alors que les électrodes fixes de C2X, C2Y et C2Z sont successivement polarisées à $V_{ss}$. Dans les phases 7, 9 et 11, les électrodes fixes de C1X, C1Y et C1Z sont successivement polarisées à $V_{ss}$, alors que les électrodes fixes de C2X, C2Y et C2Z sont successivement polarisées à $V_{REG}$. Les différentes phases d'un cycle de mesure sont aussi indiquées dans le tableau suivant :

| Polarité | 0 | | | | | | 1 | | | | | |
|---|---|---|---|---|---|---|---|---|---|---|---|---|
| Axe choisi | X | | Y | | Z | | X | | Y | | Z | |
| Phases | 0 | 1 | 2 | 3 | 4 | 5 | 6 | 7 | 8 | 9 | 10 | 11 |
| C1X | Vpx | Vreg | Vpy | Vpy | Vpz | Vpz | Vnx | Vss | Vny | Vny | Vnz | Vnz |
| C2X | Vpx | Vss | Vpy | Vpy | Vpz | Vpz | Vnx | Vreg | Vny | Vny | Vnz | Vnz |
| C1Y | Vpx | Vpx | Vpy | Vreg | Vpz | Vpz | Vnx | Vnx | Vny | Vss | Vnz | Vnz |
| C2Y | Vpx | Vpx | Vpy | Vss | Vpz | Vpz | Vnx | Vnx | Vny | Vreg | Vnz | Vnz |
| C1Z | Vpx | Vpx | Vpy | Vpy | Vpz | Vreg | Vnx | Vnx | Vny | Vny | Vnz | Vss |
| C2Z | Vpx | Vpx | Vpy | Vpy | Vpz | Vss | Vnx | Vnx | Vny | Vnx | Vnz | Vreg |
| CM | Vpx | Vpx | Vpy | Vpy | Vpz | Vpz | Vnx | Vnx | Vny | Vny | Vnz | Vnz |

Comme indiqué ci-dessus, la mesure d'un paramètre physique commence par 8 cycles utilisant l'algorithme de dichotomie mémorisé dans les moyens de mémorisation de l'unité logique 5 de la figure 1. Ces 8 premiers cycles sont référencés normalement de 0 à 7 et permettent de faire converger le convertisseur numérique-analogique DAC 7 à une tension $V_{DAC}$ d'équilibre pour chaque axe mesuré. Le code DACbus fourni au convertisseur est un mot binaire de 10 bits, qui est composé de 2 bits de poids faible LSB et 8 bits de poids fort référencés MSB-0 à MSB-7 du plus petit au plus grand. Dans le premier cycle 0, le code DACbus fourni au convertisseur 7 est défini avec le bit de poids le plus fort MSB-7 à 1, ce qui correspond à "1000000000" pour une valeur 512, qui doit définir la tension intermédiaire $V_{REG}$/2 sans écart de tension. Au terme du cycle 0, ce code DACbus et la valeur fournie par l'amplificateur comparateur 4 sont évalués. Si (comp XNOR pol) est égal à "1 ", le bit de poids fort MSB-7 est maintenu pour le prochain cycle, sinon il est modifié à 0. Par contre, le bit de poids fort MSB-6 passe à 1 pour le cycle suivant. Successivement les bits de poids fort du plus grand MSB-7 au plus petit MSB-0 sont adaptés pour les 8 premiers cycles de mesure utilisant l'algorithme de dichotomie.

Au terme des 8 premiers cycles, il ne reste que les deux bits de poids faible LSB à adapter pour chaque registre de l'unité logique 5. Dans les 8 cycles suivants de mesure, il est utilisé le suréchantillonnage, c'est-à-dire pour les cycles référencés 8 à 15. La valeur du ou des compteurs pour les signaux numériques de la polarisation positive et de la polarisation négative, doit être incrémentée si comp = "1" et décrémentée si comp = "0". Normalement il suffirait de trois cycles de mesure pour établir les deux bits de poids faible, mais il est préférable d'effectuer huit cycles de mesure pour diminuer le bruit.

Il a été décrit ci-devant d'effectuer pour chaque cycle de mesure, six phases pour les trois axes avec la polarisation positive, suivies par six phases pour les trois axes avec la polarisation négative. Cependant il peut aussi être envisagé de prévoir les quatre premières phases pour la polarisation positive et la polarisation négative des condensateurs de l'axe X, suivies par quatre phases pour la polarisation positive et la polarisation négative des condensateurs de l'axe Y, et suivies finalement par quatre phases pour la polarisation positive et la polarisation négative des condensateurs de l'axe Z.

Dans le cas d'un capteur capacitif uniaxe à une seule paire de condensateurs, chaque cycle de mesure ne comprend que quatre phases avec la polarisation positive et la polarisation négative des électrodes fixes des condensateurs. Avec un capteur uniaxe, les signaux numériques de mesure sont fournis plus rapidement en utilisant l'algorithme de dichotomie pour les 8 premiers cycles de mesure, suivis par les 8 cycles de suréchantillonnage.

A partir de la description qui vient d'être faite, de multiples variantes de réalisation du procédé de mesure d'un paramètre physique et du circuit électronique d'interface du capteur capacitif pour sa mise en oeuvre peuvent être conçues par l'homme du métier sans sortir du cadre de l'invention définie par les revendications. Il peut être envisagé de modifier la durée de chaque phase l'une par rapport à l'autre ou la durée de chaque cycle durant les opérations de mesure du paramètre physique. Il peut être prévu de modifier l'ordre des polarisations positive et négative dans chaque cycle de mesure. Il peut aussi être placé dans chaque cycle de mesure au moins deux phases supplémentaires d'un test de fonctionnalité du circuit électronique.

**Revendications**

1. Procédé de mesure d'un paramètre physique au moyen d'un circuit électronique (1) d'interface d'un capteur capacitif (2), qui comprend au moins deux condensateurs (C1X, C2X) montés en différentiel dont une électrode commune (CM) est susceptible de se déplacer par rapport à chaque électrode fixe des deux condensateurs pour modifier la valeur capacitive de chaque condensateur lors de la mesure du paramètre physique, ledit circuit électronique comprenant un amplificateur à transfert de charges (4) connecté à l'électrode commune (CM) par l'intermédiaire d'une unité de commutation (3), une unité logique (5) reliée à la sortie de l'amplificateur pour un traitement numérique de l'information fournie par l'amplificateur et la fourniture de signaux numériques de mesure, et un convertisseur numérique-analogique (7) susceptible de fournir une tension de mesure ($V_{DAC}$) aux électrodes par l'intermédiaire de l'unité de commutation (3), la tension de mesure étant définie sur la base d'une conversion d'un mot binaire (DACbus) définissant au moins un des signaux numériques de mesure, le procédé comprenant dans chaque cycle successif de mesure des étapes consistant à :

   a) polariser les électrodes des condensateurs (C1X, C2X, CM) par l'intermédiaire de l'unité de commutation (3) avec une tension de mesure ($V_{DAC}$) fournie par le convertisseur numérique-analogique (7) sur la base d'un premier signal numérique de mesure d'un précédent cycle ou d'un premier mot binaire initial fourni par l'unité logique (5), le premier signal numérique dépendant d'une première polarisation des électrodes fixes des condensateurs,
   b) polariser l'électrode fixe du premier condensateur (C1X) à une tension régulée haute ($V_{REG}$) d'une source de tension d'alimentation du circuit électronique, et à polariser l'électrode fixe du second condensateur (C2X) à une tension basse ($V_{SS}$) de la source de tension d'alimentation, pour adapter le premier signal numérique de mesure dans l'unité logique (3),
   c) polariser les électrodes des condensateurs (C1X, C2X, CM) par l'intermédiaire de l'unité de commutation (3) avec une tension de mesure ($V_{DAC}$) fournie par le convertisseur numérique-analogique (7) sur la base d'un second signal numérique de mesure d'un précédent cycle ou d'un second mot binaire initial fourni par l'unité logique (3), le second signal numérique dépendant d'une seconde polarisation inverse de la première polarisation des électrodes fixes des condensateurs, et
   d) polariser l'électrode fixe du premier condensateur (C1X) à une tension basse ($V_{SS}$) de la source de tension d'alimentation du circuit électronique, et à polariser l'électrode fixe du second condensateur (C2X) à une tension régulée haute ($V_{REG}$) de la source de tension d'alimentation, pour adapter le second signal numérique de mesure dans l'unité logique (5), l'unité logique étant en mesure sur la base des premier et second signaux numériques de mesure obtenus de retirer tout écart de tension lié aux composants électroniques,

   **caractérisé en ce que** depuis le début d'une mesure d'un paramètre physique et pendant un certain nombre de cycles de mesure successifs, qui comprennent les étapes a) à d), les premier et second signaux numériques sont adaptés dans l'unité logique (5) à chaque cycle par la mise en fonction d'un algorithme de dichotomie mémorisé dans l'unité logique et sur la base de la valeur de sortie de l'amplificateur à transfert de charges (4), pour fournir des premier et second signaux numériques adaptés au convertisseur numérique-analogique pour générer la tension de mesure ($V_{DAC}$) à appliquer aux électrodes par l'intermédiaire de l'unité de commutation (3).

2. Procédé de mesure selon la revendication 1, pour lequel l'unité logique (5) comprend un premier registre pour mémoriser le premier signal numérique de mesure sur 10 bits, et un second registre pour mémoriser le second signal numérique de mesure sur 10 bits, **caractérisé en ce que** l'algorithme de dichotomie est utilisé depuis le début d'une mesure du paramètre physique, tel qu'une accélération, une force, une vitesse angulaire ou une pression, pendant 8 cycles successifs, et **en ce que**, lors des 8 premiers cycles de mesure, l'unité logique (5) adapte successivement le mot binaire de chaque signal numérique de mesure en partant du bit de poids le plus fort au bit de poids le plus faible de 8 bits de poids fort.

3. Procédé de mesure selon l'une des revendications 1 et 2, **caractérisé en ce que** des étapes de sur-échantillonnage sont effectuées dans des cycles de mesure, qui suivent les cycles de mesure utilisant l'algorithme de dichotomie pour adapter et stabiliser dans l'unité logique à chaque cycle les premier et second signaux numériques de mesure, qui sont fournis au convertisseur numérique-analogique pour générer la tension de mesure ($V_{DAC}$) à appliquer aux électrodes par l'intermédiaire de l'unité de commutation (3).

4. Procédé de mesure selon la revendication 3, **caractérisé en ce que** les étapes de suréchantillonnage sont effectuées dans chaque cycle de mesure pour adapter les deux bits de poids faible de chaque mot binaire de 10 bits, pendant au moins 8 cycles successifs de manière à supprimer le bruit.

5. Procédé de mesure selon l'une des revendications précédentes, pour lequel le capteur capacitif est du type triaxial avec trois paires de condensateurs (C1X, C2X, C1Y, C2Y, C1Z, C2Z) montés en différentiel avec une électrode commune (CM) par paire ou pour toutes les paires et deux électrodes fixes pour chaque paire, et l'unité logique du circuit électronique est en mesure de fournir des premier et second signaux numériques de mesure pour chaque axe de mesure X, Y et Z, **caractérisé en ce que** le procédé comprend 12 phases successives par cycle de mesure, qui consistent à répéter successivement pendant les six premières phases, les étapes a) et b) pour chaque axe X, Y, Z avec le premier signal numérique correspondant à l'axe sélectionné, et à répéter successivement pendant les six dernières phases, les étapes c) et d) pour chaque axe X, Y, Z avec le second signal numérique correspondant à l'axe sélectionné.

6. Procédé de mesure selon l'une des revendications 1 à 4, pour lequel le capteur capacitif est du type triaxial avec trois paires de condensateurs (C1X, C2X, C1Y, C2Y, C1Z, C2Z) montés en différentiel avec une électrode commune (CM) par paire ou pour toutes les paires et deux électrodes fixes pour chaque paire, et pour lequel l'unité logique (5) du circuit électronique (1) est en mesure de fournir des premier et second signaux numériques de mesure pour chaque axe de mesure X, Y et Z, **caractérisé en ce que** le procédé comprend 12 phases successives par cycle de mesure, qui consistent à effectuer pour l'axe X, les étapes a) à d) avec les premier et second signaux numériques de mesure de l'axe X, à effectuer pour l'axe Y à la suite de l'axe X, les étapes a) à d) avec les premier et second signaux numériques de mesure de l'axe Y et finalement à effectuer pour l'axe Z à la suite de l'axe Y, les étapes a) à d) avec les premier et second signaux numériques de mesure de l'axe Z.

7. Procédé de mesure selon l'une des revendications précédentes, **caractérisé en ce que** dans une étape préliminaire avant la mesure d'un paramètre physique, une opération de calibrage fonction du capteur capacitif du type MEMS est effectuée de manière à mémoriser dans l'unité logique (5) un mot binaire d'adaptation et à fournir ce mot binaire au convertisseur numérique-analogique pour adapter la tension de mesure ($V_{DAC}$).

8. Circuit électronique (1) d'interface d'un capteur capacitif, qui comprend une paire de condensateurs (C1X, C2X) montés en différentiels, le circuit électronique comprenant des moyens adaptés à la mise en oeuvre de toutes les étapes du procédé de mesure selon l'une des revendications précédentes, notamment un amplificateur à transfert de charges (4) connecté à l'électrode commune (CM) par l'intermédiaire d'une unité de commutation (3), une unité logique (5) reliée à la sortie de l'amplificateur pour un traitement numérique de l'information fournie par l'amplificateur et la fourniture de premier et second signaux numériques de mesure dépendant respectivement d'une première polarisation des électrodes fixes des condensateurs et d'une seconde polarisation inverse de la première polarisation, et un convertisseur numérique-analogique (7) susceptible de fournir une tension de mesure ($V_{DAC}$) aux électrodes par l'intermédiaire de l'unité de commutation (3), la tension de mesure étant définie sur la base d'une conversion du mot binaire (DACbus) relatif au premier signal numérique ou au second signal numérique de mesure, **caractérisé en ce que** l'unité logique (5) comprend des moyens de mémorisation dans lesquels au moins un algorithme de dichotomie est mémorisé, l'unité logique étant en mesure au moyen d'un processeur de mettre en fonction l'algorithme de dichotomie dans des premiers cycles de mesure d'un paramètre physique pour adapter les premier et second signaux numériques sur la base de la valeur de sortie de l'amplificateur à transfert de charges (4) afin de fournir des premier et second signaux numériques adaptés au convertisseur numérique-analogique pour générer la tension de mesure ($V_{DAC}$) à appliquer aux électrodes par l'intermédiaire de l'unité de commutation (3).

9. Circuit électronique (1) selon la revendication 8, en tant qu'interface d'un capteur capacitif triaxial, qui comprend trois paires de condensateurs (C1X, C2X, C1Y, C2Y, C1Z, C2Z) montés en différentiel, **caractérisé en ce qu'**il comprend un unique amplificateur à transfert de charge (4) pour la mesure selon les trois axes X, Y, Z de mesure du capteur, l'amplificateur étant capable de fournir une information du type numérique à l'unité logique (5), et **en ce que** l'unité logique fournit des premier et second signaux numériques de mesure pour chaque axe de mesure X, Y, Z.

**10.** Circuit électronique (1) selon l'une des revendications 8 et 9, **caractérisé en ce que** l'unité logique (5) comprend six registres pour mémoriser les premier et second signaux numériques de mesure de chaque axe, chaque registre étant défini sur 10 bits.

**11.** Circuit électronique (1) selon l'une des revendications 8 à 10, **caractérisé en ce qu'**il comprend un générateur (6) de tension de référence à gain programmable, ce générateur fournissant une tension de référence programmée ($V_{DACin}$) au convertisseur numérique-analogique (7) sur la base de la gamme de mesure désirée du paramètre physique, cette tension de référence est multipliée dans un premier multiplicateur au mot binaire (DACbus) du premier signal numérique de mesure ou du second signal numérique de mesure pour la fourniture de la tension de mesure ($V_{DAC}$) en sortie du convertisseur.

**12.** Circuit électronique (1) selon la revendication 11, **caractérisé en ce qu'**un mot binaire d'adaptation (OFFSETbus) lié au capteur capacitif est fourni au convertisseur numérique-analogique pour être multiplié dans un second multiplicateur par une seconde tension de référence programmée ($V_{OFFin}$) du générateur de tension de référence (6), les tensions de sortie des deux multiplicateurs étant additionnées afin de fournir la tension de mesure ($V_{DAC}$) en sortie du convertisseur.

**Claims**

**1.** Method of measuring a physical parameter by means of an electronic interface circuit (1) for a capacitive sensor (2), which includes at least two differential connected capacitors (C1X, C2X) whose common electrode (CM) is capable of moving relative to each fixed electrode of the two capacitors to alter the capacitive value of each capacitor when the physical parameter is being measured, said electronic circuit including a charge transfer amplifier (4) connected to the common electrode (CM) via a switching unit (3), a logic unit (5) connected to the amplifier output for digital processing of the data supplied by the amplifier and for supplying digital measuring signals, and a digital-analogue converter (7) capable of supplying a measurement voltage ($V_{DAC}$) to the electrodes via the switching unit (3), the measurement voltage being defined on the basis of a binary word (DACbus) conversion defining at least one of the digital measuring signals, the method including, in each successive measuring cycle, steps consisting in:

a) polarising the electrodes of the capacitors (C1X, C2X, CM) via the switching unit (3) with a measurement voltage ($V_{DAC}$) supplied by the digital-analogue converter (7) on the basis of a first digital measuring signal of a preceding cycle or a first initial binary word supplied by the logic unit (5), the first digital signal depending on a first polarisation of the fixed electrodes of the capacitors,

b) polarising the fixed electrode of the first capacitor (C1X) at a regulated high voltage ($V_{REG}$) of a supply voltage source for the electronic circuit, and polarising the fixed electrode of the second capacitor (C2X) at a low voltage ($V_{SS}$) of the supply voltage source, to adapt the first digital measuring signal in the logic unit (5),

c) polarising the electrodes of the capacitors (C1X, C2X, CM) via the switching unit (3) with a measurement voltage ($V_{DAC}$) supplied by the digital-analogue converter (7) on the basis of a second digital measuring signal of a preceding cycle or a second initial binary word supplied by the logic unit (5), the second digital signal depending on a second inverted polarisation of the first polarisation of the fixed electrodes of the capacitors, and

d) polarising the fixed electrode of the first capacitor (C1X) at a low voltage ($V_{SS}$) of the electronic circuit supply voltage source, and polarising the fixed electrode of the second capacitor (C2X) at a regulated high voltage ($V_{REG}$) of the supply voltage source to adapt the second digital measuring signal in the logic unit (5), the logic unit being capable of removing any voltage offset linked to the electronic components on the basis of the first and second obtained digital measuring signals,

**characterized in that**, from the start of a physical parameter measurement and during a certain number of successive measuring cycles, which include steps a) to d), the first and second digital signals are adapted in the logic unit (5) in each cycle by implementing a dichotomy algorithm stored in the logic unit and on the basis of the output value of the charge transfer amplifier (4), to supply first and second adapted digital signals to the digital-analogue converter to generate the measurement voltage ($V_{DAC}$) to be applied to the electrodes via the switching unit (3).

2. Measuring method according to claim 1, wherein the logic unit (5) includes a first register for storing the first digital measuring signal in 10 bits, and a second register for storing the second digital measuring signal in 10 bits, **characterized in that** the dichotomy algorithm is used from the start of a physical parameter measurement, such as an acceleration, force, angular speed or pressure, for 8 successive cycles, and **in that**, during the first 8 measuring cycles, logic unit (5) adapts the binary word of each digital measuring signal in succession from the most significant bit to the least significant bit with 8 most significant bits.

3. Measuring method according to any of claims 1 and 2, **characterized in that** oversampling steps are performed in measuring cycles, which follow the measuring cycles using the dichotomy algorithm, to adapt and stabilise in the logic unit in each cycle the first and second digital measuring signals, which are supplied to the digital-analogue converter to generate the measurement voltage ($V_{DAC}$) to be applied to the electrodes via the switching unit (3).

4. Measuring method according to claim 3, **characterized in that** the oversampling steps are carried out in each measuring cycle to adapt the two least significant bits of each 10 bit binary word during at least 8 successive cycles so as to remove noise.

5. Measuring method according to any of the preceding claims, wherein the capacitive sensor is of the tri-axis type with three pairs of differential connected capacitors (C1X, C2X, C1Y, C2Y, C1Z, C2Z) with one common electrode (CM) per pair or for all the pairs and two fixed electrodes for each pair, and the logic unit of the electronic circuit is capable of supplying first and second digital measuring signals for each measuring axis X, Y and Z, **characterized in that** the method includes 12 successive phases per measuring cycle, which consist in repeating in succession during the first six phases the steps a) and b) for each axis X, Y, Z with the first digital signal corresponding to the selected axis, and in repeating in succession during the last six phases the steps c) and d) for each axis X, Y, Z with the second digital signal corresponding to the selected axis.

6. Measuring method according to any of claims 1 to 4, wherein the capacitive sensor is of the tri-axis type with three pairs of differential connected capacitors (C1X, C2X, C1Y, C2Y, C1Z, C2Z) with one common electrode (CM) per pair or for all the pairs and two fixed electrodes for each pair, and wherein the logic unit (5) of the electronic circuit (1) is capable of supplying first and second digital measuring signals for each measuring axis X, Y and Z, **characterized in that** the method includes 12 successive phases per measuring cycle, which consist in performing the steps a) to d) for the X axis with the first and second digital measuring signals of the X axis, in performing steps a) to d) for the Y axis after the X axis with the first and second digital measuring signals of the Y axis, and finally in performing steps a) to d) for the Z axis, after the Y axis, with the first and second digital measuring signals of the Z axis.

7. Measuring method according to any of the preceding claims, **characterized in that** in a preliminary step before the physical parameter measurement, a calibrating operation depending on the MEMS capacitive sensor is performed so as to store a binary adapting word in the logic unit (5) and to supply said binary word to the digital-analogue converter for adapting the measurement voltage ($V_{DAC}$).

8. Electronic interface circuit (1) for a capacitive sensor, which includes a pair of differential connected capacitors (C1X, C2X) for implementing the measuring method according to any of the preceding claims, the electronic circuit including a charge transfer amplifier (4) connected to the common electrode (CM) via a switching unit (3), a logic unit (5) connected to the amplifier output for digital processing of the data supplied by the amplifier and for supplying first and second digital measuring signals, dependent respectively on a first polarisation of the fixed electrodes of the capacitors and a second inverted polarisation of the first polarisation, and a digital-analogue converter (7) capable of supplying a measurement voltage ($V_{DAC}$) to the electrodes via the switching unit (3), the measurement voltage being defined on the basis of a binary word (DACbus) conversion relating to the first digital measuring signal or the second digital measuring signal, **characterized in that** the logic unit (5) includes storage means in which at least one dichotomy algorithm is stored, the logic unit being capable, by means of a processor, of starting the dichotomy algorithm in first physical parameter measuring cycles to adapt the first and second digital measuring signals on the basis of the output value of the charge transfer amplifier (4) so as to supply adapted first and second digital signals to the digital-analogue converter to generate the measurement voltage ($V_{DAC}$) to be applied to the electrodes via the switching unit (3).

9. Electronic circuit (1) according to claim 8, as an interface for a tri-axis capacitive sensor, which includes three pairs of differential connected capacitors (C1X, C2X, C1Y, C2Y, C1Z, C2Z), **characterized in that** it includes a single charge transfer amplifier (4) for measurement on the three measuring axes X, Y and Z of the sensor, the amplifier being capable of supplying digital type data to the logic unit (5), and **in that** the logic unit supplies first and second digital measuring signals for each measuring axis X, Y, Z.

10. Electronic circuit (1) according to any of claims 8 and 9, **characterized in that** the logic unit (5) includes six registers for storing the first and second digital measuring signals of each axis, each register being defined in 10 bits.

11. Electronic circuit (1) according to any of claims 8 to 10, **characterized in that** it includes a reference voltage generator (6) with a programmable gain, said generator supplying a programmed reference voltage ($V_{DACin}$) to the digital-analogue converter (7) on the basis of the desired measurement range of the physical parameter, said reference voltage is multiplied in a first multiplier by the binary word (DACbus) of the first digital measuring signal or the second digital measuring signal to supply the measurement voltage ($V_{DAC}$) at the converter output.

12. Electronic circuit (1) according to claim 11, **characterized in that** a binary adapting word (OFFSETbus) linked to the capacitive sensor is supplied to the digital-analogue converter to be multiplied in a second multiplier by a second programmed reference voltage ($V_{OFFin}$) of the reference voltage generator (6), the output voltages of the two multipliers being added together to supply the measurement voltage ($V_{DAC}$) at the converter output

**Patentansprüche**

1. Verfahren zum Messen eines physikalischen Parameters mittels einer elektronischen Schnittstellenschaltung (1) eines kapazitiven Sensors (2), die wenigstens zwei differentiell geschaltete Kondensatoren (C1X, C2X) umfasst, wovon sich eine gemeinsame Elektrode (CM) in Bezug auf jede feste Elektrode der zwei Kondensatoren verlagern kann, um den kapazitiven Wert jedes Kondensators zu modifizieren, wenn der physikalische Parameter gemessen wird, wobei die elektronische Schaltung einen Verstärker (4) mit Ladungsübertragung, der mit der gemeinsamen Elektrode (CM) über eine Kommutationseinheit (3) verbunden ist, eine Logikeinheit (5), die mit dem Ausgang des Verstärkers verbunden ist, um eine digitale Verarbeitung der Information auszuführen, die von dem Verstärker geliefert wird, und um digitale Messsignale zu liefern, und einen Digital/Analog-Umsetzer (7), der eine Messspannung ($V_{DAC}$) über die Kommutationseinheit (3) an die Elektroden liefern kann, umfasst, wobei die Messspannung anhand einer Umsetzung eines Binärwortes (DACbus), das wenigstens eines der digitalen Messsignale definiert, definiert ist, wobei das Verfahren in jedem aufeinander folgenden Messzyklus Schritte umfasst, die darin bestehen:

a) die Elektroden der Kondensatoren (C1X, C2X, CM) über die Kommutationseinheit (3) mit einer Messspannung ($V_{DAC}$), die von dem Digital/Analog-Umsetzer (7) anhand eines ersten digitalen Messsignals eines vorhergehenden Zyklus oder eines von der Logikeinheit (5) gelieferten anfänglichen ersten Binärwortes geliefert wird, vorzuspannen, wobei das erste digitale Signal von einer ersten Vorspannung der festen Elektroden der Kondensatoren abhängt,

b) die feste Elektrode des ersten Kondensators (C1X) mit einer hohen regulierten Spannung ($V_{REG}$) einer Versorgungsspannungsquelle der elektronischen Schaltung vorzuspannen und die feste Elektrode des zweiten Kondensators (C2X) mit einer niedrigen Spannung ($V_{SS}$) der Versorgungsspannungsquelle vorzuspannen, um das erste digitale Messsignal in der Logikeinheit (3) anzupassen,

c) die Elektroden der Kondensatoren (C1X, C2X, CM) über die Kommutationseinheit (3) mit einer Messspannung ($V_{DAC}$) vorzuspannen, die von dem Digital/Analog-Umsetzer (7) anhand eines zweiten digitalen Messsignals eines vorhergehenden Zyklus oder eines von der Logikeinheit (3) gelieferten anfänglichen zweiten Binärwortes geliefert wird, wobei das zweite digitale Signal von einer zweiten Vorspannung abhängt, die in Bezug auf die erste Vorspannung der festen Elektroden der Kondensatoren umgekehrt ist, und

d) die feste Elektrode des ersten Kondensators (C1X) mit einer niedrigen Spannung ($V_{SS}$) der Versorgungsspannungsquelle der elektronischen Schaltung vorzuspannen und die feste Elektrode des zweiten Kondensators (C2X) mit einer hohen regulierten Spannung ($V_{REG}$) der Versorgungsspannungsquelle vorzuspannen, um das zweite digitale Messsignal in der Logikeinheit (5) anzupassen, wobei die Logikeinheit in der Lage ist, anhand der erhaltenen ersten und zweiten digitalen Messsignale jeglichen Spannungsabstand, der mit den elektronischen Komponenten in Beziehung steht, zu beseitigen,

**dadurch gekennzeichnet, dass** ab dem Beginn einer Messung eines physikalischen Parameters und während einer bestimmten Anzahl von aufeinander folgenden Messzyklen, die die Schritte a) bis d) umfassen, das erste und das zweite digitale Signal in der Logikeinheit (5) in jedem Zyklus durch Ausführen eines in der Logikeinheit gespeicherten Dichotomie-Algorithmus und anhand des Ausgangswertes des Verstärkers (4) mit Ladungsübertragung angepasst werden, um an den Digital/Analog-Umsetzer angepasste digitale erste und zweite digitale Signale zu liefern, um die Messspannung ($V_{DAC}$) zu erzeugen, die an die Elektroden über die Kommutationseinheit (3) angelegt werden soll.

2. Messverfahren nach Anspruch 1, für das die Logikeinheit (5) ein erstes Register, um das erste digitale Messsignal mit 10 Bits zu speichern, und ein zweites Register, um das zweite digitale Messsignal mit 10 Bits zu speichern, umfasst, **dadurch gekennzeichnet, dass** der Dichotomie-Algorithmus ab dem Beginn einer Messung des physikalischen Parameters wie etwa einer Beschleunigung, einer Kraft, einer Winkelgeschwindigkeit oder eines Drucks während 8 aufeinander folgenden Zyklen verwendet wird und dass während der 8 ersten Messzyklen die Logikeinheit (5) das Binärwort jedes digitalen Messsignals von dem höchstwertigen Bit zu dem niedrigstwertigen Bit von 8 höherwertigen Bits anpasst.

3. Messverfahren nach einem der Ansprüche 1 und 2, **dadurch gekennzeichnet, dass** Schritte des Überabtastens in jenen Messzyklen ausgeführt werden, die den Messzyklen folgen, die den Dichotomie-Algorithmus verwenden, um in der Logikeinheit in jedem Zyklus das erste und das zweite digitale Messsignal, die an den Digital/Analog-Umsetzer geliefert werden, zu stabilisieren, um die Messspannung ($V_{DAC}$) zu erzeugen, die an die Elektroden über die Kommutationseinheit (3) angelegt werden soll.

4. Messverfahren nach Anspruch 3, **dadurch gekennzeichnet, dass** die Schritte des Überabtastens in jedem Messzyklus ausgeführt werden, um die zwei niedrigstwertigen Bits jedes binären Worts aus 10 Bits während wenigstens 8 aufeinander folgenden Zyklen anzupassen, um das Rauschen zu unterdrücken.

5. Messverfahren nach einem der vorhergehenden Ansprüche, für das der kapazitive Sensor vom dreiachsigen Typ mit drei Paaren von differentiell geschalteten Kondensatoren (C1X, C2X, C1Y, C2Y, C1Z, C2Z) ist, wobei eine gemeinsame Elektrode (CM) pro Paar oder für sämtliche Paare und zwei feste Elektroden für jedes Paar vorgesehen sind und die Logikeinheit der elektronischen Schaltung in der Lage ist, erste und zweite digitale Messsignale für jede Messachse X, Y und Z zu liefern, **dadurch gekennzeichnet, dass** das Verfahren 12 aufeinander folgende Phasen pro Messzyklus umfasst, die darin bestehen, nacheinander während der sechs ersten Phasen die Schritte a) und b) für jede X-Achse, Y, Z mit dem ersten digitalen Signal, das der gewählten Achse entspricht, zu wiederholen und nacheinander während der sechs letzten Phasen die Schritte c) und d) für jede X-Achse, Y, Z mit dem zweiten digitalen Signal, das der gewählten Achse entspricht, zu wiederholen.

6. Messverfahren nach einem der Ansprüche 1 bis 4, für das der kapazitive Sensor vom dreiachsigen Typ mit drei Paaren von differentiell geschalteten Kondensatoren (C1X, C2X, C1Y, C2Y, C1Z, C2Z) ist, wobei eine gemeinsame Elektrode (CM) pro Paar oder für sämtliche Paare und zwei feste Elektroden für jedes Paar vorgesehen sind, und für das die Logikeinheit (5) der elektronischen Schaltung (1) in der Lage ist, erste und zweite digitale Messsignale für jede Messachse (X, Y und Z) zu liefern, **dadurch gekennzeichnet, dass** das Verfahren 12 aufeinander folgende Phasen pro Messzyklus umfasst, die darin bestehen, für die X-Achse die Schritte a) bis d) mit den ersten und zweiten digitalen Messsignalen der X-Achse auszuführen, für die Y-Achse nach der X-Achse die Schritte a) bis d) mit den ersten und zweiten digitalen Messsignalen der Y-Achse auszuführen und schließlich für die Z-Achse nach der Y-Achse die Schritte a) bis d) mit den ersten und zweiten digitalen Messsignalen der Z-Achse auszuführen.

7. Messverfahren nach einem der vorhergehenden Ansprüche, **dadurch gekennzeichnet, dass** in einem vorausgehenden Schritt vor dem Messen eines physikalischen Parameters eine Kalibrierungsoperation in Abhängigkeit von dem kapazitiven Sensor des Typs MEMS in der Weise ausgeführt wird, dass in der Logikeinheit (5) ein Anpassungs-Binärwort gespeichert wird und dieses Binärwort an den Digital/Analog-Umsetzer geliefert wird, um die Messspannung ($V_{DAC}$) anzupassen.

8. Elektronische Schnittstellenschaltung (1) eines kapazitiven Sensors, die ein Paar differentiell geschalteter Kondensatoren (C1X, C2X) umfasst, wobei die elektronische Schaltung Mittel umfasst, die für die Ausführung sämtlicher Schritte des Messverfahrens nach einem der vorhergehenden Ansprüche geeignet sind, insbesondere einen Verstärker (4) mit Ladungsübertragung, der über eine Kommutationseinheit (3) mit der gemeinsamen Elektrode (CM) verbunden ist, eine Logikeinheit (5), die mit dem Ausgang des Verstärkers verbunden ist, um eine digitale Verarbeitung der Information auszuführen, die von dem Verstärker geliefert wird, und erste und zweite digitale Messsignale zu liefern, die von einer ersten Vorspannung der festen Elektroden der Kondensatoren bzw. von einer zweiten Vorspannung, die in Bezug auf die erste Vorspannung umgekehrt ist, abhängen, und einen Digital/Analog-Umsetzer (7), der eine Messspannung ($V_{DAC}$) über die Kommutationseinheit (3) an die Elektroden liefern kann, wobei die Messspannung anhand einer Umsetzung des Binärwortes (DACbus) in Bezug auf das erste digitale Messsignal oder das zweite digitale Messsignal definiert ist,
**dadurch gekennzeichnet, dass** die Logikeinheit (5) Speichermittel umfasst, in denen wenigstens ein Dichotomie-Algorithmus gespeichert ist, wobei die Logikeinheit mittels eines Prozessors in der Lage ist, den Dichotomie-Algorithmus in ersten Messzyklen eines physikalischen Parameters auszuführen, um die ersten und die zweiten digitalen Signale anhand des Ausgangswertes des Verstärkers (4) mit Ladungsübertragung anzupassen, um erste und zweite angepasste digitale Signale zu dem Digital/Analog-Umsetzer zu liefern, um die Messspannung ($V_{DAC}$) zu erzeugen, die an die Elektroden über die Kommutationseinheit (3) angelegt werden soll.

9. Elektronische Schaltung (1) nach Anspruch 8 als Schnittstelle eines dreiachsigen kapazitiven Sensors, die drei Paare von differentiell geschalteten Kondensatoren (C1X, C2X, C1Y, C2Y, C1Z, C2Z) umfasst, **dadurch gekennzeichnet, dass** sie einen einzigen Verstärker (4) mit Ladungsübertragung für die Messung längs der drei Messachsen X, Y, Z des Sensors umfasst, wobei der Verstärker Informationen des digitalen Typs zu der Logikeinheit (5) liefern kann und die Logikeinheit erste und zweite digitale Messsignale für jede Messachse X, Y, Z liefert.

10. Elektronische Schaltung (1) nach einem der Ansprüche 8 und 9, **dadurch gekennzeichnet, dass** die Logikeinheit (5) sechs Register zum Speichern der ersten und zweiten digitalen Messsignale jeder Achse umfasst, wobei jedes Register mit 10 Bits definiert ist.

11. Elektronische Schaltung (1) nach einem der Ansprüche 8 bis 10, **dadurch gekennzeichnet, dass** sie einen Referenzspannungsgenerator (6) mit programmierbarer Verstärkung umfasst, wobei dieser Generator anhand des gewünschten Messbereichs des physikalischen Parameters eine programmierte Referenzspannung ($V_{DACin}$) zu dem Digital/Analog-Umsetzer (7) liefert, wobei diese Referenzspannung in einem ersten Multiplizierer mit dem Binärwort (DACbus) des ersten digitalen Messsignals oder des zweiten digitalen Messsignals multipliziert wird, um die Messspannung ($V_{DAC}$) am Ausgang des Umsetzers zu liefern.

12. Elektronische Schaltung (1) nach Anspruch 11, **dadurch gekennzeichnet, dass** ein Anpassungs-Binärwort (OFFSETbus), das mit dem kapazitiven Sensor in Beziehung steht, zu dem Digital/Analog-Umsetzer geliefert wird, um in einem zweiten Multiplizierer mit einer zweiten programmierten Referenzspannung ($V_{OFFin}$) des Referenzspannungsgenerators (6) multipliziert zu werden, wobei die Ausgangsspannungen der zwei Multiplizierer addiert werden, um die Messspannung ($V_{DAC}$) am Ausgang des Umsetzers zu liefern.

Fig. 1

EP 2 343 507 B1

## Fig. 2

Cycle mesure

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1835263 A
- WO 2004113930 A
- WO 2008107737 A

**Littérature non-brevet citée dans la description**

- **MM. H. LEUTHOLD ; F. RUDOLPH.** *Sensors and actuators,* 1990, vol. A21-A23, 278-281
- A 1 mV MOS Comparator. *IEEE J. Solid-State Circuits,* Juin 1978, vol. SC-13, 294-298